# EUROPEAN PATENT APPLICATION

(11) **EP 1 942 330 A2**
(43) Date of publication of application: **09.07.2008**
(21) Application number: 08100113.3
(22) Date of filing: 04.01.2008
(51) Int. Cl.: G01N 15/08, G01M 3/32

(54) **Dustproof and waterproof performance detection device**

(30) Priority: 05.01.2007 TW 96200270 U
(71) Applicant: SmartAnt Telecom Co., Ltd., Jhudong Township Hsinchu County (TW)
(72) Inventor: Hsu, Yung-Ming, Jhubei City Hsinchu County (TW)
(74) Representative: Cabinet Plasseraud

(57) **Abstract**

A dustproof and waterproof performance detection device for a user to observe a dustproof and waterproof performance detection process of an object by naked eyes is described. The detection device includes a box with at least one transparent side, a carrier, and a gauge. The carrier is movable in the box in a depth direction of the box. The box carries water for a tester to perform the dustproof and waterproof performance detection, such that the tester uses the carrier to carry the object, so as to move the object to a detection position and compare with scales of the gauge. Therefore, the tester is able to participate in the whole detection process.

## Description

### CROSS-REFERENCE TO RELATED APPLICATIONS

**This non-provisional application claims priority under 35 U.S.C. § 119(a) on Patent Application** No(s). 096200270 **filed in Taiwan, R.O.C. on January 5, 2007, the entire contents of which are hereby incorporated by reference.**

### BACKGROUND OF THE INVENTION

### Field of Invention

The present invention relates to a dustproof and waterproof performance detection device, and more particularly a detection device capable of observing a detection process of an object with naked eyes.

### Related Art

Electronic products, such as personal digital assistants, GPS navigators, cell phones, and outdoor antennae will be operated at a harsh environment or an unstable outdoor environment. In these environments, dust and water always damage the electronic devices. Accordingly, the electronic devices must have good dustproof and waterproof effects, such that dust and water will not invade into the electronic devices to damage the electronic parts when being used in these environments.

Therefore, in product design, it is important to ensure the safety of the parts. However, for machine design or quality management staff, it definitely costs a lot of time and energy to thoroughly validate the safety of each part, while safety specifications are effective tools for measuring the safety of parts. For example, international designations (IEC specifications) established by International Electrotechnical Commission and European Norm specifications (EN specifications) established by European Committee for Standardization (CEN) and European Committee for Electrotechnical Standardization (CENELEC) set forth an IP grade system, which classifies products according to dustproof and waterproof performance of protection constitutions of the machines. The IP grade is composed of two numbers indicating properties, and the larger the number is, the higher the protection grade is. The first number refers to a protection grade of preventing from be contacted and invaded by human body or solid foreign matter, and is indicated by 0 to 6. The second number refers to a waterproof grade, and is indicated by 0 to 8. Taking IP67 as an example, 6 refers to a complete dustproof constitution, and the corresponding test condition must have no dust invading, and 7 refers to being capable of applied under water conditionally, and the corresponding test condition is being immersed under water at a depth of 1 meter for 30 minutes, and the product should not malfunction.

Generally speaking, when manufactures send the products to validaters, the validaters will perform the dustproof and waterproof performance detection according to the IEC specifications and EN specifications. However, the manufactures merely know whether the product pass through the detection, without further knowing the conditions during the detection or in the detection state of the failed products. More specifically, for example, the condition of waterproof test of IP67 is to immerse under water at a depth of 1 meter for 30 minutes. The product may fail the test at a depth of less than 1 meter under water or at a time for less than 30 minutes, but the manufacturers cannot obtain the conditions of detection failure of the product. Therefore, the manufacturers cannot further improve the product according to the information, and cannot pass through the validation to obtain corresponding safety signs indicating qualification.

### SUMMARY OF THE INVENTION

As manufacturers cannot obtain the conditions of detection failure of the product in the prior art, they cannot make further development and improvements according to the information. In view of this, the present invention provides a dustproof and waterproof performance detection device, in which the detection process of an object can be observed by naked eyes, so as to obtain the conditions of the detection failure of the product

The dustproof and waterproof performance detection device of the present invention is used to detect dustproof and waterproof performance of an object. The detection device includes a box, a carrier, and a gauge. The box has at least one side being observable by naked eyes and carries a solution. The carrier is movably disposed in the box and carries the object to move gradually in a depth direction of the box to a detection position according to detection requirements. The gauge extends along the depth direction of the box and has a plurality of scales distributed at equal intervals.

According to the dustproof and waterproof performance detection device of the present invention, the box is made of a transparent material, such as tempered glass, such that the tester can observe whether there are bubbles generated by the object with naked eyes during the detection, so as to analyze or adjust the detection state. Furthermore, the gauge of the present invention has scales for defining the water depth, such that the tester can use the carrier to carry the object and gradually move to the detection position in the depth direction of the box, and compare with the scales of the gauge. When the object is invaded by the solution at the detection position, the tester can record the position and obtain the conditions of detection failure of the product, so as to make further developments and improvements on the product according to the information. Therefore, compared with the convention technology that merely capable of indirectly obtaining the detection results, the present invention makes the tester to control the whole detection process and obtain more direct and detailed detection information according to detection requirements.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below for illustration only, and thus are not limitative of the present invention, and wherein:
FIG. 1 is a perspective view of an embodiment of the present invention;
FIG. 2 is a state view of the embodiment of the present invention without reaching a detection position; and
FIG. 3 is a state view of the embodiment of the present invention reaching the detection position.

### DETAILED DESCRIPTION OF THE INVENTION

In order to make the object, structure, features, and functions of the present invention more comprehensible, preferred embodiments accompanied with figures are described in detail below.

The dustproof and waterproof performance detection device of the present invention is used to detect dustproof and waterproof performance of an object. The object includes, but not limited to, an electronic product, such as an outdoor antenna, a personal digital assistant, a GPS navigator and a cell phone. Moreover, the technology of the present invention is also applicable for products satisfying the dustproof and waterproof performance grade IP67. In embodiments of the present invention, an outdoor antenna is used as application embodiment.

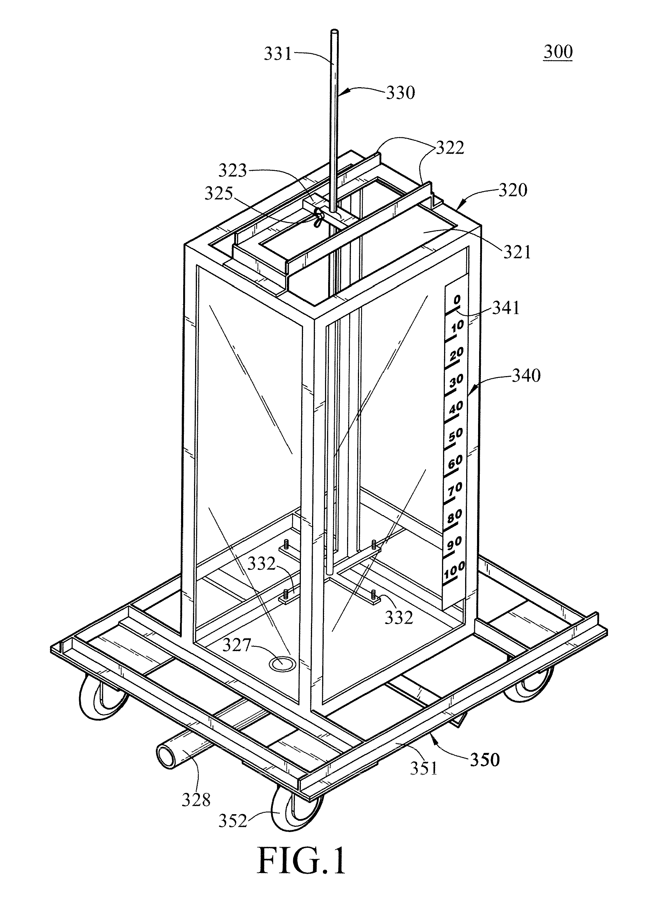

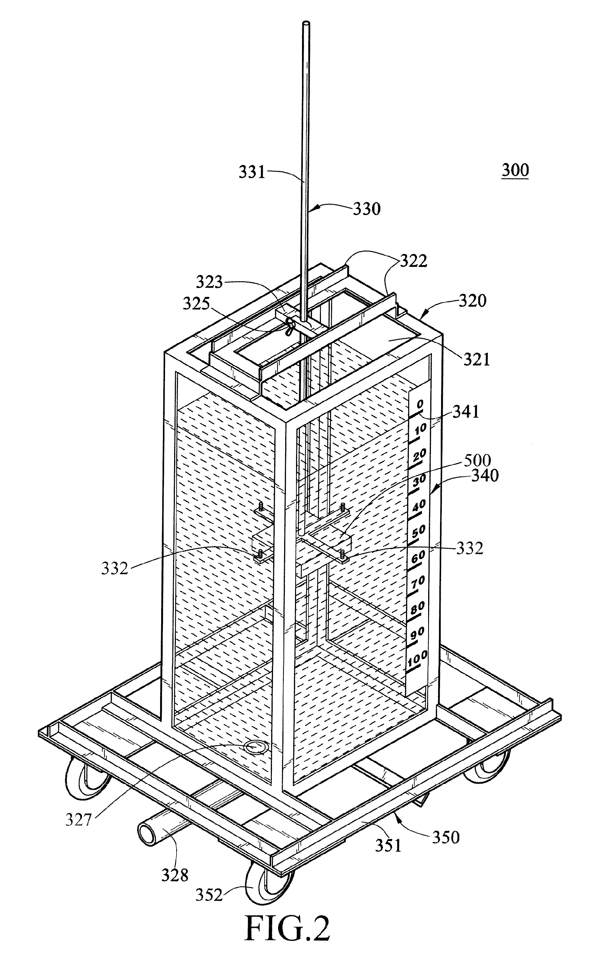

Referring to FIGS. 1 and 2, a dustproof and waterproof performance detection device 300 fabricated according to the criterions defined in IP67 includes a box 320, a carrier 330, and a gauge 340. The box 320 includes an accommodating chamber 321 for carrying water with a depth of more than 1 meter. The box 320 is made of a transparent material, such as tempered glass, such that not only the tester can observe the accommodating chamber 321 of the box 320 from any side, but also the strength of the box 320 can be improved, and thus the box 320 can bear considerable water pressure. The material of the box 320 is not limited to the tempered glass, any material that make the box 320 to bear the water pressure during detection and meets the requirement of at least one side being observable by naked eyes can be used. The box 320 has two clamping blocks 322 disposed at a suitable distance at the top thereof. A support block 323 spans between the clamping blocks 322. The support block 323 has a through hole for the carrier 330 to penetrate and a fixing member 325. The fixing member 325 can position the carrier 330 at a detection position. For facilitating the box 320 to contain water, the box 320 further includes an opening 327 at the bottom of the accommodating chamber 321. The opening 327 is communicated with the accommodating chamber 321, and has a pipe 328 connected externally. The pipe 328 is connected to a water source, such that water can enter the accommodating chamber 321 through the opening 327. Furthermore, the box 320 further includes a roller assemble 350 at the bottom thereof. The roller assemble 350 further includes a plurality of frames 351 and a plurality of rollers 352, and thus a tester can move the box 320.

The carrier 330 is movably disposed in the box 320. The carrier 330 includes a movable rod 331 and two fixed rods 332. The two fixed rods 332 is disposed at one end of the movable rod 331 in a radial direction of the movable rod 331, and the two fixed rods 332 are crossed with each other. The movable rod 331 penetrates the through hole of the support block 323, extends into the accommodating chamber 321 of the box 320, and moves in a depth direction of the box 320. The two fixed rods 332 are used to dispose an outdoor antenna 500. As the outdoor antenna 500 is required to be detected under water at a depth of 1 meter, the overall length of the carrier 330 must be greater than 1 meter for performing the detection.

The gauge 340 is disposed on the box 320, which can be realized by being adhered on the box 320 or directly built in the box 320, and is located on the side of the accommodating chamber 321 that is observable by naked eyes. Furthermore, the gauge 340 extends in the depth direction of the box 320, with a length greater than or equal to 1 meter, and has a plurality of scales 341 distributed at equal intervals. Herein, the unit of the interval of the gauge 340 is in centimeter, and the interval between the scales 341 is, for example, but not limited to, 10 centimeters, thereby forming eleven markers of 0 to 100.

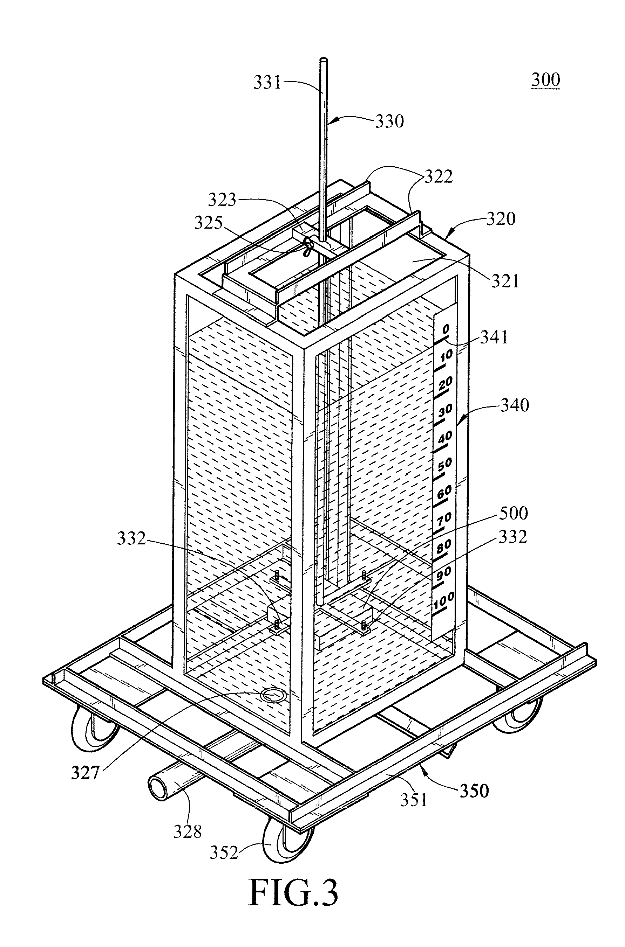

Please refer to FIG. 1 to FIG. 3, during actual detection, water is filled into the pipe 328 and flows into the opening 327 through the pipe 328, and then introduced into the accommodating chamber 321, till the water is more than 1 meter deep. It is notable that, the water surface position is aligned with a first scale 341 of the gauge 340, thus indicating the water depth is 0 centimeter. Next, the outdoor antenna 500 is disposed under the two fixed rods 332 of the carrier 330, and the fixing member 325 on the support block 323 is loosened, such that the movable rod 331 of the carrier 330 can move in the accommodating chamber 321 in the depth direction of the box 320. When the outdoor antenna 500 contacts the water, it begins to bear the water pressure. The tester can gradually control the movable rod 331 to move the outdoor antenna 500 to the detection position according to the test requirements. As the movable rod 331 enters the accommodating chamber 321 deeper, the water pressure born by the outdoor antenna 500 becomes greater. If the outdoor antenna 500 cannot bear the current water pressure, the tester will observe bubbles generated by the outdoor antenna 500, which indicates that the outdoor antenna 500 is invaded by water. At this time, the tester can operate the fixing member 325 to fix the movable rod 331, such that the movable rod 331 will not move any more, and can be compared with the scales 341 of the gauge 340 to record the position at which the outdoor antenna 500 generates bubbles. Therefore, the tester can further analyze and strengthen the construction of the outdoor antenna 500 according to the information.

If the outdoor antenna 500 can still bear the water pressure, the tester can move the movable rod 331 continuously, and compare with the scales 341 of the gauge 340, such that the outdoor antenna 500 reaches the detection position of 100 centimeters deep. At this time, the water pressure is 0.1 kg/cm². The tester begins to time for 30 minutes, if the outdoor antenna 500 can be immersed under water at a depth of 100 centimeters for 30 minutes, the initial detection process is completed.

## Claims

1. A dustproof and waterproof performance detection device, for detecting dustproof and waterproof performance of an object, comprising:
a box, with at least one side being observable by naked eyes, and containing a solution;
a carrier, movably disposed in the box, for carrying the object to gradually move to a detection position along a depth direction of the box according to test requirements; and
a gauge, extending in the depth direction of the box, and having a plurality of scales distributed thereon at equal intervals.

2. The dustproof and waterproof performance detection device as claimed in claim 1,
wherein the box comprises an accommodating chamber for containing water.

3. The dustproof and waterproof performance detection device as claimed in claim 2,
wherein the box further comprises an opening communicating with the accommodating chamber at a bottom of the accommodating chamber, such that water enters the accommodating chamber through the opening.

4. The dustproof and waterproof performance detection device as claimed in claim 1,
wherein the box comprises a support block disposed at a top thereof, the support block has a through hole for the carrier to penetrate and a fixing member for positioning the carrier at the detection position.

5. The dustproof and waterproof performance detection device as claimed in claim 4,
wherein the carrier comprises a movable rod and two fixed rods, the movable rod penetrates the through hole of the support block, extends into the box, and moves in the depth direction of the box, each fixed rod is disposed at one end of the movable rod in a radial direction of the movable rod, and each fixed rod is used for disposing the object.

6. The dustproof and waterproof performance detection device as claimed in claim 1,
wherein the box further comprises a roller assemble at the bottom thereof, so as to move the box.

7. The dustproof and waterproof performance detection device as claimed in claim 1,
wherein a length of the carrier is greater than 1 meter.

8. The dustproof and waterproof performance detection device as claimed in claim 1,
wherein the interval between the scales is 10 centimeters.
